# EUROPÄISCHE PATENTANMELDUNG

(11) **EP 1 304 310 A2**
(43) Veröffentlichungstag der Anmeldung: **23.04.2003**
(21) Anmeldenummer: 02022000.0
(22) Anmeldetag: 01.10.2002
(51) Int. Cl.: C01B 3/34, C01B 3/36, C01B 3/32

(54) **Verfahren und Vorrichtung zur Reformierung flüssiger Kohlenwasserstoffgemische**

(30) Priorität: 05.10.2001 DE 10149060
(71) Anmelder: DaimlerChrysler AG, 70567 Stuttgart (DE)
(72) Erfinder: Docter, Andreas, Dr.-Ing, 73728 Esslingen (DE); Wiesheu, Norbert, Dipl.-Ing., 89312 Günzburg (DE)

(57) **Zusammenfassung**

Ein Verfahren zur Reformierung eines flüssigen Kohlenwasserstoffgemischs bei dem das Kohlenwasserstoffgemisch zunächst vollständig verdampft wird, bevor es mit gasförmigen Reaktionspartnern in Kontakt und zur Reaktion gebracht wird. Als Reformersystem kann dabei eine Vorrichtung mit mindestens zwei Reformerräumen, bestehend aus einem Verdampfungsraum und mindestens zwei Reaktionsräumen, dienen, bei dem Dosierungsmittel für flüssige Kohlenwasserstoffe im Bereich des Verdampfungsraumes und Einbringungsmittel für gasförmige Reaktionspartner im Bereich zwischen mindestens zwei der Reformerräume angeordnet sind. Die Erfindung ermöglicht die Reformierung von flüssigen Kohlenwasserstoffgemischen ohne die Bildung unerwünschter Rückstände wie z.B. Ruß oder Teer.

## Beschreibung

Die Erfindung betrifft ein Verfahren zur Reformierung von unter Normalbedingungen flüssigen Kohlenwasserstoffgemischen, sowie eine Vorrichtung zur Durchführung dieses Verfahrens. Ferner betrifft die Erfindung die Verwendung dieser Vorrichtung in Fahrzeugen mit Brennstoffzellen.

Aus dem Stand der Technik ist es prinzipiell bekannt, Kohlenwasserstoffgemische mittels Dampfreformierung, partieller Oxidation oder autothermer Reformierung zu reformieren und dabei durch Zugabe von Wasser oder wasserhaltigen Gemischen ein wasserstoffhaltiges Gas zu erhalten. Üblicherweise findet die Reformierung dabei in einem Reaktor statt, wobei in dem Reaktor außer den Edukten Katalysatoren vorhanden sind, welche den Reformierungsprozeß unterstützen.

Nun wird jedoch bei der Reformierung von Kohlenwasserstoffgemischen die Problematik aufgeworfen, daß sich die vollständige, insbesondere rückstandsfreie Reformierung der dem Reformierungsreaktor - im folgenden Reformer genannt - zugeführten Kohlenwasserstoffgemische schwierig gestaltet. Bei vielen Reformierungsverfahren und Reformern des Standes der Technik entstehen für den Ablauf des Reformierungsprozesses nachteilige Rückstände und Ablagerungen. Dabei handelt es sich um Ablagerungen, die Crackprodukte der Kohlenwasserstoffe, insbesondere elementaren Kohlenwasserstoff enthalten, z.B. Ruß oder Teer. Diese Rückstände führen dann zu einer Schädigung des Katalysators mit gravierenden Nachteilen für dessen Wirkung und Lebensdauer, oder sogar zum Verstopfen des Reformers.

Diesem Problem wird im Stand der Technik im allgemeinen durch eine möglichst homogene Aufbereitung oder Konditionierung des zu reformierenden Kohlenwasserstoff-Reaktionspartner-Gemischs zu begegnen versucht.

In der deutschen Offenlegungsschrift DE 14 42 991 A1 (Chemical Construction Corp.) wird z.B. ein kontinuierliches Verfahren zum Reformieren von Naphtha beschrieben, bei dem die Bildung unerwünschter, elementaren Kohlenstoff enthaltender Rückstände und Ablagerungen wie z.B. Ruß oder Teer vermieden wird. Dabei werden zunächst die drei Reaktionspartner Naphtha, Wasserdampf und Luft getrennt voneinander verdampft, dann bei einer Temperatur von mindestens 535 °C vereinigt und einer Gaskonditionierkammer zugeführt, wo ein Teil des Naphthas bereits umgesetzt wird. Die Verweilzeit der Reaktionsmischung in der Konditionierkammer ist dabei kritisch und muß genau eingestellt werden, da sich bei zu langen Verweilzeiten unerwünschte Rückstände bilden. Von der Konditionierkammer wird das Reaktionsgemisch zur Vervollständigung der Reaktion einer katalytischen Reformiereinheit zugeführt. Die Reformierungsreaktion verläuft nahezu quantitativ und vor allem ohne die Bildung unerwünschter Rückstände. Nachteilig an diesem Verfahren sind jedoch die extrem hohen Temperaturen und der unökonomische, wirkungsgradreduzierende Umgang mit thermischer Energie. Vor allem aber sind die genau einzustellenden Verweilzeiten der Reaktionsmischungen in der Konditionierkammer von Nachteil, da dies die Anwendung des Verfahrens z.B. im Automobilbereich, bei sich ständig ändernden Lastbedingungen, unmöglich macht.

In der deutschen Offenlegungsschrift DE 199 55 892 A1 (DaimlerChrysler) wird ein Verfahren zur Reformierung eines Kohlenwasserstoffgemischs mit langkettigen Kohlenwasserstoffanteilen offenbart, das die rückstandsfreie Umsetzung der Kohlenwasserstoffe erlaubt. Dabei wird das Kohlenwasserstoffgemisch bevorzugt zusammen mit einem sauerstoffhaltigen Gas in eine erste Reaktionskammer eingedüst und dort bereits teilweise nichtkatalytisch umgesetzt. Dieses erste Reaktionsprodukt wird dann mit einem wasserhaltigen Reaktionspartner, der zusätzliche Kohlenwasserstoffe enthalten kann, vermischt und in einer zweiten Reaktionskammer katalytisch reformiert. Außerdem wird ein für die Durchführung des Verfahrens geeigneter Reaktor beschrieben. Verfahren und Reaktor ermöglichen einen kontinuierlichen Betrieb, die annähernd rückstandsfreie Umsetzung der Kohlenwasserstoffe und die thermische und räumliche Trennung der einzelnen Schritte der Reformierungsreaktion. Letzterer Aspekt ermöglicht die Durchführung der einzelnen Reformierungsreaktionsschritte bei der jeweils optimalen Temperatur.

Einen weiteren Ansatz zur Bewältigung des beschriebenen Rückstandsproblems offenbart die deutschen Offenlegungsschrift DE 199 56 378 A1 (DaimlerChrysler). Darin wird ein Verfahren zur Einbringung von Betriebsstoffen zur Reformierung eines Kohlenwasserstoffgemischs vorgeschlagen, bei dem Zufuhr, Mischen und Erhitzen der Betriebsstoffe in einer mehrstufigen Anordnung nacheinander erfolgt, wobei das Erhitzen durch die Zufuhr der heißen Betriebsstoffe selbst bewerkstelligt wird. Ein in diesen heißen Stoffstrom eingebraches Kohlenwasserstoffgemisch wird dadurch nahezu augenblicklich auf eine sehr hohe Temperatur gebracht, wodurch das nachteilige, verzögerte Verdampfen der einzelnen Kohlenwasserstoffraktionen vermieden wird. Außerdem wird ein für die Durchführung des Verfahrens geeigneter Reaktor beschrieben.

Als Ursache für die Bildung der erwähnten unerwünschten Rückstände wird die ungleichmäßige Verdampfung der in den Kohlenwasserstoffgemischen enthaltenen Kohlenwasserstoffe angesehen. So besteht beispielsweise Benzin im wesentlichen aus einem Gemisch aus linearen, verzweigten und cyclischen Alkanen mit 7 bis 10 Kohlenstoffatomen, die überwiegend Siedepunkte unter 135 °C besitzen, und Diesel aus ebensolchen Alkanen, jedoch mit höheren Siedepunkten im Bereich von 180 bis 370 °C. Werden solche Gemische verdampft, so verdampfen die Kohlenwasserstoffe der Reihe nach gemäß ihres Siedepunktes, und zwar zuerst der Kohlenwasserstoff mit dem niedrigsten Siedepunkt und zuletzt der Kohlenwasserstoff mit dem höchsten Siedepunkt. Bei einer nachfolgenden Reaktion mit einem Reaktionspartner, wie z.B. Luftsauerstoff, reagieren die Kohlenwasserstoffe dann auch der Reihe nach, d.h. gemäß ihren Siedepunkten, ab: Die niedrigsiedenden zuerst, die hochsiedenden zuletzt. Die Folge ist, daß zu Beginn der Reaktion für die verdampften Kohlenwasserstoffe ein Überangebot an Reaktionspartnern, z.B. Sauerstoff, besteht, sich im Verlaufe der Reaktion das Angebot an Reaktionspartnern und die Reaktionsbedingungen ständig ändert und gegen Ende der Reaktion ein Unterangebot an Reaktionspartnern besteht. Die Folge sind inhomogene Bedingungen im Reaktionsraum. Während die Bedingungen zu Anfang oxidierend (Verbrennung) sind können sie gegen Ende der Reaktion in einigen Bereichen des Reaktionsraumes pyrolytisch (thermische Zersetzung) oder sogar reduzierend (Hydrierung) sein. Die Folge ist die nachteilhafte Entstehung von Crackprodukten. Besonders nachteilhaft ist dabei die Entstehung sehr hochmolekularer, schwerflüchtiger Kohlenwasserstoffverbindungen wie z.B. Teer oder gar die Entstehung von partikulären Produkten, wie z.B. elementarer Kohlenstoff (Ruß).

Aufgabe der vorliegenden Erfindung ist es daher, ein Reformierungsverfahren für unter Normalbedingungen flüssige Kohlenwasserstoffgemische zur Verfügung zu stellen, bei dem die Kohlenwasserstoffgemische annähernd quantitativ und im wesentlichen ohne die Bildung unerwünschter Rückstände umgesetzt werden. Ferner ist es Aufgabe der vorliegenden Erfindung, eine Vorrichtung zur Durchführung des Verfahrens bereitzustellen.

Erfindungsgemäß wird diese Aufgabe durch das im Anspruch 1 genannte Verfahren gelöst.

Der Lösung der Aufgabe liegt die Erkenntnis zugrunde, daß eine optimale Gemischaufbereitung, d.h. ein optimal homogenisiertes Gemisch aus Kohlenwasserstoff und Reaktionspartner, nur erzielt werden kann, wenn alle zu vermischenden Bestandteile gasförmig vorliegen. D.h. insbesondere, daß das zu reformierende, unter Normalbedingungen flüssige Kohlenwasserstoffgemisch vor Vermischung mit den Reaktionspartnern vollständig verdampft werden muß, und zwar unter Bedingungen, unter denen im wesentlichen keine Pyrolyse auftritt.

Ein erster Gegenstand der vorliegenden Erfindung ist daher ein Verfahren zur Reformierung eines flüssigen Kohlenwasserstoffgemischs, mit folgenden Verfahrensschritten:

Zuerst wird das flüssige Kohlenwasserstoffgemisch kontinuierlich und dosiert bereit gestellt.
Im darauffolgenden zweiten Verfahrensschritt wird das flüssige Kohlenwasserstoffgemisch im wesentlichen vollständig, jedoch weitgehend zersetzungsfrei verdampft.
Danach wird das verdampfte Kohlenwasserstoffgemisch mit wenigstens einem gasförmigen Reaktionspartner in Kontakt gebracht. Anschließend wird das erhaltene gasförmige Gemisch aus Kohlenwasserstoffen und Reaktionspartnern zur Reaktion gebracht.
Das dabei erhaltene Reaktionsgemisch kann nachfolgend erneut mit mindestens einem Reaktionspartner in Kontakt und nachfolgend zur Reaktion gebracht werden. Diese Verfahrensschritte können so oft wie gewünscht oder erforderlich wiederholt werden.
Im darauffolgenden letzten Verfahrensschritt wird das erhaltene Reformatgas seiner Verwendung entgegen geführt.

Unter einem flüssigen Kohlenwasserstoffgemisch wird dabei ein unter Normalbedingungen (Normaldruck = 1013 mbar; Normaltemperatur 273 K) flüssiges Gemisch, bestehend im wesentlichen aus einem oder mehreren Kohlenwasserstoffen, verstanden. Beispiele dafür sind handelsübliche Kraftstoffe wie Benzin oder-Diesel.

Geeignete Verfahren zum kontinuierlichen und dosierten Bereitstellen der Kohlenwasserstoffgemische werden z.B. in den nicht vorveröffentlichten deutschen Patentanmeldungen P 10020089.3 (DaimlerChrysler) und P 10020088.5 (DaimlerChrysler) beschrieben. Geeignet sind dabei auch Verfahren, die hochfrequentdiskontinuierlich arbeiten, sogenannte quasi-kontinuierliche Verfahren. Bei diesen Verfahren sind die Zeitintervalle zwischen jeweils zwei Substanzbereitstellungsvorgängen so kurz, daß der resultierende diskontinuierliche Substanzstrom aufgrund der Trägheit des eingesetzten Reaktors von diesem als kontinuierlich wahrgenommen wird.

Unter dosiertem Bereitstellen wird im Rahmen der vorliegenden Erfindung verstanden, daß eine genaue abgemessene Menge des flüssigen Kohlenwasserstoffgemischs bereitgestellt wird.

Mit im wesentlichen vollständige Verdampfung wird im Rahmen der vorliegenden Erfindung verstanden, daß das flüssige Kohlenwasserstoffgemisch zu mehr als 98 Gew.-%, vorzugsweise zu mehr als 99 Gew.-%, insbesondere zu 100 Gew.-% vom flüssigen in den gasförmigen Zustand überführt wird.

Mit weitgehend zersetzungsfreier Verdampfung ist gemeint, daß die Gasphase am Ausgang des Verdampfungsraums im wesentlichen dieselbe chemische Zusammensetzung aufweist wie die flüssige Phase an dessen Eingang. Vorzugsweise sollen beide Phasen zu mehr als 98 Gew.-%, insbesondere zu mehr als 99 Gew.-% und ganz besonders zu 100 Gew.-% dieselbe chemische Zusammensetzung aufweisen. Der Begriff Verdampfen wird in dieser Erfindung streng von den Begriffen Gasifizieren oder Vergasen unterschieden. Unter diesen Begriffen wird das chemische Umsetzen von Festkörpern in Gase verstanden.

Unter Normaldruck kann eine zersetzungsfreie Verdampfung erfindungsgemäß bei Temperaturen im Verdampfungsraum von maximal 600 °C erreicht werden. Die Temperaturen liegen jedoch vorzugsweise im Bereich von 200 bis 500 °C und insbesondere im Bereich von 300 bis 400 °C. Wird der Reformer unter Druck betrieben, liegen die Siedetemperaturen der Kohlenwasserstoffgemische entsprechend höher. In diesem Fall müssen die Temperaturen im Verdampfungsraum so gewählt werden, daß sie näher an den oberen Grenzen der oben angegebenen Temperaturbereiche liegen.

Zu den Reaktionspartnern im Rahmen des hier beschriebenen Reformierungsverfahrens gehören z.B. Wasser, Luft oder sonstige sauerstoffhaltigen Gasgemische und reiner Sauerstoff, vorzugsweise Wasser und Luft. In der vorliegenden Erfindung werden diese Reaktionspartner gasförmig eingesetzt. Das bedeutet insbesondere für den Reaktionspartner Wasser, daß er in Form von Wasserdampf eingesetzt wird.

Das Produkt des hier beschriebenen Reformierungsverfahrens ist das sogenannte Reformatgas. Dabei handelt es sich um ein H₂reiches Gas, das weitere Reaktionsprodukte wie z.B. CO₂ und CO, aber auch aus den Edukten stammende Verunreinigungen wie z.B. N₂, sowie H₂O enthält bzw. enthalten kann. Nach der vervollständigten Reformierung ist der Gehalt an nicht oder nur teilweise umgesetzten Kohlenwasserstoffen erfindungsgemäß niedrig und liegt bei weniger als 2 Gew.-%, vorzugsweise bei weniger als 1 Gew.-%, insbesondere bei weniger als 0,1 Gew.-%.

Das Reformatgas wird schließlich seiner Verwendung entgegen geführt. Das bedeutet, daß es ggf. noch einem oder mehreren Reinigungsschritten unterworfen oder in einer sonstigen Art und Weise nachbehandelt wird, bevor es schließlich seinem Verwendungszweck, z.B. als Brennstoff für eine Brennstoffzelle, zugeführt wird.

Bei dem erfindungsgemäßen Verfahren werden die eingesetzten, flüssigen Kohlenwasserstoffgemische annähernd quantitativ und im wesentlichen ohne die Bildung unerwünschter Rückstände wie z.B. Teer oder Ruß reformiert. Das erfindungsgemäße Verfahren besitzt jedoch noch weitere Vorteile.

So kann beispielsweise durch den gasförmigen Zustand aller Edukte der Reformierungsreaktion bei deren Vermischung eine besonders gute Durchmischung und ein besonders guter Wärmeübergang von dem mindestens einen gasförmigen Reaktionspartner zu dem Kohlenwasserstoffgemisch erzielt werden. Die Folge ist eine besonders homogene Aufbereitung des Reaktionsgemisches. Dies hat, wie bereits erwähnt, vorteilhafte Auswirkungen auf die Zurückdrängung der Cracking-Nebenreaktionen bei der Reformierung und damit auf die Bildung unerwünschter Rückstände.

Der erfoderliche Energieeinsatz kann bei dem erfindungsgemäßen Verfahren mit Vorteil noch weiter reduziert werden, wenn die gasförmigen Reaktionspartner z.B. mit Hilfe der Abwärme eines nachgeschalteten Reformergasverbrauchers, beispielsweise einer Brennstoffzelle, aufgeheizt werden. In diesem Fall liegt eine Art Kraft-Wärme-Kopplung vor, die bekanntermaßen einen besonders hohen Wirkungsgrad besitzt.

Weitere Vorteile der vorliegenden Erfindung werden nachstehend an geeigneter Stelle in der Beschreibung genannt.

In einer bevorzugten Ausführungsform des erfindungsgemäßen Verfahrens wird das flüssige Kohlenwasserstoffgemisch durch Zufuhr thermischer Energie verdampft. Für die Verdampfung reicht zwar die Zufuhr von wenigstens der Verdampfungsenthalpie des Kohlenwasserstoffgemischs prinzipiell aus, es ist jedoch weiter bevorzugt, wenigstens die für die Reformierungsreaktion notwendige thermische Energie zuzuführen.

Wie jede chemische Reaktion und jedes chemische Verfahren, so kann auch das erfindungsgemäße Reformierungsverfahren nur innerhalb eines bestimmten Temperaturbereichs, dem Betriebstemperaturbereich, durchgeführt, bzw. betrieben werden. Dabei ist es ein weiterer Vorteil der vorliegenden Erfindung, daß das erfindungsgemäße Verfahren bei verhältnismäßig niedrigen Temperaturen durchgeführt werden kann. Der erfindungsgemäß geeignete Betriebstemperaturbereich ist natürlich abhängig vom eingesetzten Druck, der je nach Wunsch oder Erfordernis bei Umgebungsdruck bis zu mehreren 10 bar liegen kann. Ferner muß die Betriebstemperatur nicht in allen Reaktionsräumen gleich sein, sondern kann von Reaktionsraum zu Reaktionsraum schwanken. Wird der Reformer unter Umgebungsdruck betrieben, so kann die Betriebstemperaturbei bis zu 1000 °C liegen. Vorzugsweise liegt sie jedoch bei 300 bis 900 °C und insbesondere bei 400 bis 800 °C. Dies bedeutet zum einen einen geringeren Energieeinsatz und wirkt sich zum anderen vorteilhaft auf die Zurückdrängung der Crakking-Nebenreaktionen bei der Reformierung aus, da bei den erfindungsgemäß niedrigen Betriebstemperaturen noch keine Pyrolyse-Reaktionen stattfinden.

Zum Erreichen einer geeigneten Betriebstemperatur in der Startphase, in der noch keine ausreichend warmen gasförmigen Reaktionspartner vorliegen, wird die benötigte thermische Energie vorzugsweise durch wenigstens ein Mittel zum elektrischen Beheizen zugeführt.

Bei, bzw. nach Erreichen einer geeigneten Betriebstemperatur wird dem System dann die benötigte thermische Energie vorzugsweise durch wenigstens einen der gasförmigen Reaktionspartner zugeführt.

Bei dem erfindungsgemäßen Verfahren handelt es sich um ein kontinuierliches Verfahren. Dabei wird ein Substanzstrom mit der Richtung Verdampfungsraum - Reaktionsraum/-räume erzeugt. In einer bevorzugten Ausführungsform des erfindungsgemäßen Verfahrens erzeugt man in diesem Substanzstrom Wirbelbewegungen, um zum einen den Wärmeübergang zwischen den Wärmequellen - elektrische Beheizung oder gasförmige Reaktionspartner - zu unterstützen, bzw. um zum anderen die homogene Durchmischung des Kohlenwasserstoffgemischs mit den gasförmigen Reaktionspartnern zu unterstützen.

Eine besonders bevorzugte Ausführungsform des erfindungsgemäßen Verfahrens besteht in einer autothermen Führung des Verfahrens. Dabei sind die folgenden Verfahrensschritte vorgesehen:
Zuerst wird das flüssige Kohlenwasserstoffgemisch kontinuierlich und dosiert bereitgestellt.
Dann wird das flüssige Kohlenwasserstoffgemisch im wesentlichen vollständig, jedoch weitgehend zersetzungsfrei verdampft.
In einem dritten Verfahrensschritt wird das verdampfte Kohlenwasserstoffgemisch mit Wasserdampf in Kontakt gebracht und das resultierende Gemisch in einem vierten Verfahrensschritt wenigstens teilweise reformiert.
Anschließend wird das erhaltene, wenigstens teilweise reformierte Gemisch mit einem sauerstoffhaltigen Gasgemisch, vorzugsweise Luft, in Kontakt gebracht und die Reformierung im anschließenden sechsten Verfahrensschritt vervollständigt.
Danach wird das erhaltene Reformatgas seiner Verwendung entgegen geführt.

Eine weitere, besonders vorteilhafte Ausgestaltung des erfindungsgemäßen Verfahrens besteht darin, daß das flüssige Kohlenwasserstoffgemisch dampfreformiert wird. Dabei sind die folgenden Verfahrensschritte vorgesehen:
Zuerst wird das flüssige Kohlenwasserstoffgemisch kontinuierlich und dosiert bereitgestellt.
Dann wird das Kohlenwasserstoffgemisch im wesentlichen vollständig, jedoch zersetzungsfrei verdampft und in einem dritten Verfahrensschritt mit Wasserdampf in Kontakt gebracht.
Anschließend wird das erhaltene gasförmige Kohlenwasserstoff-Wasserdampf-Gemisch zur Reaktion gebracht.
Danach wird das erhaltene Reformatgas seiner Verwendung entgegen geführt.

Ein zweiter Gegenstand der vorliegenden Erfindung ist eine Vorrichtung zur Durchführung des erfindungsgemäßen Verfahrens, wie sie durch die Merkmale des kennzeichnenden Teils von Anspruch 9 definiert ist. Sie ist natürlich insbesondere dazu geeignet, um das oben genannte erfindungsgemäßen Verfahren durchzuführen, sie kann jedoch prinzipiell auch bei anderen Verfahren benutzt werden.

Die erfindungsgemäße Vorrichtung umfaßt ein Reformersystem, wobei das Reformersystem mindestens zwei in einem Behälter angeordnete Reformerräume aufweist und die Reformerräume einen Verdampfungsraum und mindestens einen Reaktionsraum umfassen. Ferner sind Mittel zum kontinuierlichen, dosierten Einbringen von flüssigen Kohlenwasserstoffgemischen - im folgenden Dosierungsmittel genannt - vorgesehen sowie Mittel zum Einbringen gasförmiger Reaktionspartner - im folgenden Einbringungsmittel genannt. Kennzeichen der erfindungsgemäßen Vorrichtung ist, daß die Dosierungsmittel im Bereich des Verdampfungsraums vorgesehen sind und die Einbringungsmittel im Bereich zwischen mindestens zwei der Reformerräume.

Geeignete Dosierungsmittel werden z.B. in den bereits oben erwähnten, nicht vorveröffentlichten deutschen Patentanmeldungen P 10020089.3 (DaimlerChrysler) und P 10020088.5 (DaimlerChrysler) beschrieben. Geeignet sind dabei auch Mittel, die hochfrequent-diskontinuierlich arbeiten, sogenannte quasi-kontinuierliche Mittel. Diese Mittel erzeugen einen diskontinuierlichen Substanzstrom, bei dem die Zeitintervalle zwischen jeweils zwei Einbringungsvorgängen so kurz sind, daß der resultierende diskontinuierliche Substanzstrom aufgrund der Trägheit des Reformersystems von diesem als kontinuierlich wahrgenommen wird.

Unter dosiertem Einbringen wird im Rahmen der vorliegenden Erfindung verstanden, daß mit den Dosierungsmitteln eine genaue Einstellung des Kohlenwasserstoffstromes, d.h. der pro Zeiteinheit in den Verdampfungsraum eingebrachten Kohlenwasserstoffmenge, möglich ist.

Durch die Anordnung der Dosierungsmittel im Bereich des Verdampfungsraums und der Einbringungsmittel im Bereich zwischen mindestens zwei der Reformerräume wird eine räumliche Trennung der Dosierungs- und der Einbringungsmittel erzielt, die die Vorraussetzung für eine separate Einbringung des Kohlenwasserstoffgemischs und dessen im wesentlichen vollständige Verdampfung vor Kontakt mit einem der Reaktionspartner schafft.

Ein weiterer Vorteil der vorliegenden Erfindung besteht darin, daß die erfindungsgemäße Vorrichtung eine kontinuierliche oder wenigstens quasi-kontinuierliche Durchführung des erfindungsgemäßen Verfahrens ermöglicht. Weiter sind verhältnismäßig hohe Strömungsgeschwindigkeiten im Reformer möglich und durch das dosierte Einbringen des Kohlenwasserstoffs eine sehr schnelle Einstellung des Reformersystems auf sich ändernde Anforderungen, wie z.B. Lastwechsel oder dergleichen. Diese Vorteile sind insbesondere im Bereich der mobilen Anwendungen, z.B. bei Fahrzeugen mit Brennstoffzellenantrieb, nützlich.

Ein weiterer Vorteil der vorliegenden Erfindung ist der geringe technische Aufwand, mit dem sie realisiert werden kann. Damit verbunden sind verhältnismäßig geringe Kosten.

In einer bevorzugten Ausführungsform der erfindungsgemäßen Vorrichtung ist mindestens eines der Einbringungsmittel zwischen dem Verdampfungsraum und einem nachgeschalteten, angrenzenden, ersten Reaktionsraum vorgesehen.

Weiter bevorzugt ist es, wenn der Verdampfungsraum in wärmeleitendem Kontakt mit einem nachgeschalteten, daran angrenzenden, ersten Reaktionsraum steht. Dadurch kann der zwischen Verdampfungs- und Reaktionsraum eintretende gasförmige Reaktionspartner, wenn er eine entsprechend hohe Temperatur aufweist, den Verdampfungsraum von seiner Rückseite aus beheizen und so dem Verdampfungsraum die für die Verdampfung notwendige thermische Energie zuführen. Ebenfalls gleichzeitig wird so der an den Verdampfungsraum angrenzende erste Reaktionsraum mitbeheizt.

Noch weiter bevorzugt ist es, wenn alle aneinander angrenzenden Reformerräume miteinander in wärmeleitendem Kontakt stehen. Dadurch wird eine optimale Ausnutzung und Verteilung der in das Reformersystem eingetragenen oder freiwerdenden thermischen Energie möglich.

Um die Durchmischung der sich in der erfindungsgemäßen Vorrichtung bewegenden Substanzen zu unterstützen und so im Reformer ein möglichst homogen aufbereitetes Gemisch zu erzeugen, ist es in einer weiteren Ausführungsform der erfindungsgemäßen Vorrichtung bevorzugt, daß in mindestens einem Reformerraum, bevorzugt in allen Reformerräumen, Mittel zum Verwirbeln des Substanzstromes - im folgenden Verwirbelungsmittel genannt - vorgesehen sind. Diese Verwirbelungsmittel sind Körper mit durchlässigen Öffnungen oder Zwischenräumen durch die sich der Substanzstrom hindurch bewegen kann, wobei sich Turbulenzen bilden.

Unter Substanzstrom wird dabei der Strom aller sich in dem Reformersystem bewegenden Substanzen verstanden. Zu diesen Substanzen zählt z.B. das eingebrachte flüssige Kohlenwasserstoffgemisch, dessen Dampf, die eingebrachten gasförmigen Reaktionspartner, die Reaktionsprodukte und alle entstehenden Gemische.

Um die Verteilung der in das Reformersystem eingetragenen thermischen Energie, d.h. den Wärmetransport von den warmen zu den aufzuheizenden Substanzströmen, zu unterstützen ist es in einer weiteren, ebenfalls bevorzugten Ausführungsform der erfindungsgemäßen Vorrichtung vorgesehen, daß die Verwirbelungsmittel aus wärmeleitfähigem Material bestehen, vorzugsweise aus Metall oder Metallegierungen.

Noch weiter bevorzugt ist es, wenn die Verwirbelungsmittel aus Metalldraht, insbesondere aus Metalldrahtgestricken oder - geflechten bestehen. In diesem Fall werden die durchlässigen Öffnungen von den Zwischenräumen zwischen den Drahtmaschen gebildet. Diese Metalldrahtgestricke oder -geflechte haben den Vorteil, daß sie eine große Oberfläche aufweisen, die eine besonders gute Verwirbelung und einen besonders guten Wärmeaustausch ermöglicht.

In einer noch bevorzugteren Ausführungsform nehmen die mittleren Durchmesser der durchlässigen Öffnungen der Verwirbelungsmittel, im Falle von Drahtgestricken sind das beispielsweise die Maschenweiten, in Strömungsrichtung zu. Dies trägt der Tatsache Rechnung, daß das Volumen des Substanzstromes durch die Einbringung gasförmiger Reaktionspartner in Strömungsrichtung zunimmt. Vorteilhafterweise werden dadurch Beinträchtigungen der Substanzströmung, wie z.B. Staus oder gar Umkehrungen der gewünschten Strömungsrichtung, vermieden.

Eine noch weiter bevorzugte Ausführungsform der vorliegenden Erfindung sieht wenigstens ein Mittel zum elektrischen Beheizen des Reaktorbehälters vor. Dabei handelt es sich vorzugsweise um eine oder mehrere Widerstandsheizungen, insbesondere um eine oder mehrere Glühkerzen.

Werden eine oder mehrere Glühkerzen eingesetzt, so können z.B. handelsübliche Glühkerzen eingesetzt werden. Beispiele dafür sind Glühkerzen, die für den Startvorgang von Dieselmotoren eingesetzt werden.

Die Mittel zum elektrischen Beheizen werden vorzugsweise im Bereich der Verwirbelungsmittel angeordnet, müssen jedoch dann, wenn es sich dabei um elektrisch leitfähige Verwirbelungsmittel handelt, elektrisch isoliert werden, um einen Kurzschluß zu vermeiden. Als Isolierung eignen sich insbesondere handelsübliche, wärmeleitende Keramikrohre.

Das oder die Mittel zum elektrischen Beheizen des Reaktorbehälters können prinzipiell in jeder beliebigen, sinnvollen Art und Weise in den Verwirbelungsmitteln angeordnet werden. Mit Vorteil wird es bzw. werden sie so angeordnet, daß alle Reformerräume gleichzeitig beheizt werden können. Diese vorteilhafte Anordnung ermöglicht die Zufuhr thermischer Energie zu allen, separat zugeführten Edukten der Reformierungsreaktion.

Ein dritter Gegenstand der vorliegenden Erfindung ist die Verwendung der erfindungsgemäßen Vorrichtung in Fahrzeugen mit Brennstoffzellen. Dabei ist die Verwendung in Brennstoffzellensystemen zum Antrieb der Fahrzeuge bevorzugt. Ebenso bevorzugt ist die Verwendung in Brennstoffzellensystemen zur zusätzlichen Versorgung von Fahrzeugen mit elektrischer Energie, insbesondere in sog. auxiliary power units, APUs. Auch der Einsatz in Brennstoffzellensystemen, die einen kombinierten Einsatz der erfindungsgemäßen Vorrichtung zum Antrieb und zur zusätzliche Versorgung mit elektrischer Energie vorsehen, kommt in Frage.

Es gibt unterschiedliche Möglichkeiten, die Lehre der vorliegenden Erfindung in vorteilhafter Weise auszugestalten und weiterzubilden. Dazu wird einerseits auf die den Patentansprüchen 1, 9 und 21 nachgeordneten Ansprüche und andererseits auf die nachfolgende Beschreibung von drei Ausführungsbeispielen der Erfindung anhand der Figuren verwiesen.
- Fig. 1a: zeigt schematisch eine erfindungsgemäße Vorrichtung, bei der drei Reformerräume in Reihe angeordnet sind und das Dosierungsmittel und die Einbringungsmittel räumlich getrennt, senkrecht zueinander angeordnet sind.
- Fig. 1b: zeigt schematisch eine Variante der erfindungsgemäßen Vorrichtung gemäß Fig. 1a, die ein verlängertes Einleitungsrohr aufweist.
- Fig. 2: zeigt schematisch eine zu der erfindungsgemäßen Vorrichtung aus Fig. 1a analoge Vorrichtung, die jedoch nur zwei in Reihe angeordnete Reformerräume aufweist.
- Fig. 3: zeigt schematisch eine erfindungsgemäße Vorrichtung, mit zwei Mitteln zum elektrischen Beheizen des Reformersystems während des Startvorgangs.

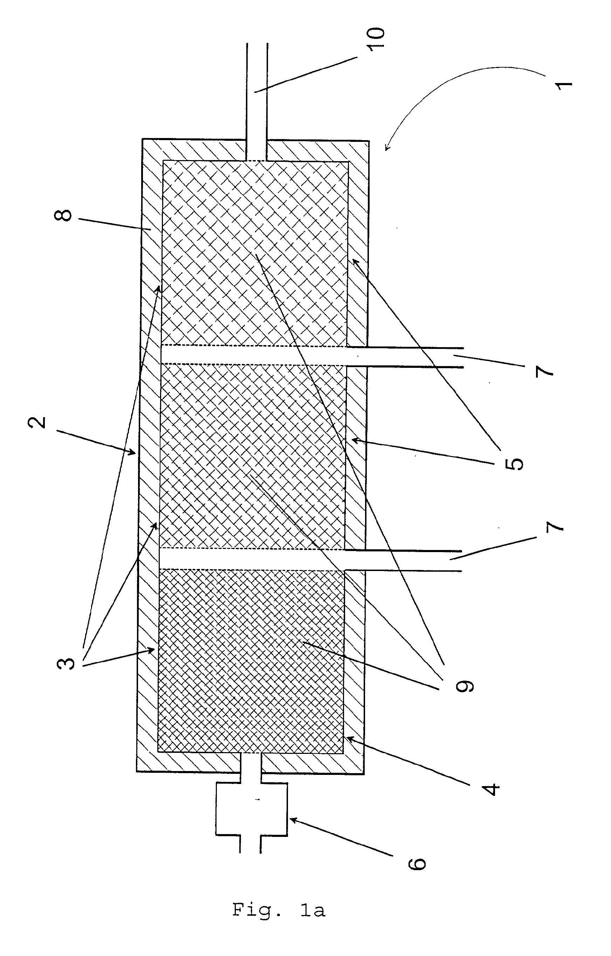

Die in Fig. 1a schematisch dargestellte Vorrichtung **1** dient zum autothermen Reformieren von flüssigen Kohlenwasserstoffgemischen. Die Vorrichtung **1** umfaßt einen Reaktorbehälter **2**, in dem drei Reformerräume **3** in Reihe angeordnet sind. Die Reformerräume umfassen einen Verdampfungsraum **4** sowie zwei Reaktionsräume **5**. Die Vorrichtung weist außerdem eine Isolierung **8**, die zwischen der Wand des Reaktorbehälters **2** und den Begrenzungen der Reformerräume **3** angeordnet ist und Verwirbelungsmittel **9** auf. Im vorliegenden Ausführungsbeispiel bestehen die Verwirbelungsmittel **9** aus Metalldrahtgeflechten, deren Maschenweite in Strömungsrichtung zunimmt.

Das zu reformierende Kohlenwasserstoffgemisch wird über ein Dosierungsmittel **6** in den Reaktorbehälter **2** eingebracht und verläßt diesen über eine Auslaßleitung **10**, nachdem es die Reformerräume **3** durchströmt hat. Das Dosierungsmittel und die Auslaßleitung **10** sind deshalb auf gegenüberliegenden Seiten des Reaktorbehälters **2** angeordnet. Nach Eintritt in den Reaktorbehälter **2** gelangt das Kohlenwasserstoffgemisch zunächst in den Verdampfungsraum **4**. Dort wird es erhitzt und im wesentlichen vollständig, jedoch zersetzungsfrei verdampft. Über das Einbringungsmittel **7**, das im Bereich zwischen Verdampfungsraum **4** und dem ersten Reaktionsraum **5** angeordnet ist, wird dem Reformersystem mindestens ein gasförmiger Reaktionspartner, vorzugsweise Wasserdampf, zugeführt. Der gasförmige Reaktionspartner beheizt den Verdampfungsraum **4** von dessen Rückseite aus, beheizt den ersten Reaktionsraum **5** von dessen Vorderseite aus und vermischt sich mit dem verdampften Kohlenwasserstoffgemisch, wobei ein weiterer Wärmeübergang zwischen dem gasförmigen Reaktionspartner und dem Kohlenwasserstoffgemisch stattfindet, bis hin zu deren thermischen Äquilibrierung. Vermischung und Wärmeverteilung werden durch die Verwirbelungsmittel **9** unterstützt. Vermischung und Wärmeverteilung findet allerdings auch schon in dem Zwischenraum zwischen Verdampfungsraum **4** und Reaktionsraum **5** statt, sowie zwischen den beiden Reaktionsräumen **5**.

Die resultierende Reaktionsmischung tritt dann in den ersten Reaktionsraum **5** ein und unterliegt dort einem ersten Reformierungsschritt. Ein zweites Einbringungsmittel **7** ist im Bereich zwischen dem ersten und dem zweiten Reaktionsraum **5** angeordnet. Über dieses zweite Einbringungsmittel **7** wird dem Reformersystem ebenfalls mindestens ein gasförmiger Reaktionspartner, vorzugsweise Luft, zugeführt. Dieser gasförmige Reaktionspartner beheizt sowohl den ersten, als auch den zweiten Reaktionsraum **5** und vermischt sich mit dem im ersten Reaktionsraum **5** entstandenen Reaktionsgemisch. Die dabei resultierende Reaktionsmischung unterliegt einem zweiten Reformierungsschritt, durch den die Reformierungsreaktion vervollständigt wird. Das entstandene Reformatgas verläßt schließlich den Reaktorbehälter **2** über die Auslaßleitung **10**.

In Fig. 1a sind die Reformerräume **3** jeweils durch einen Zwischenraum voneinander getrennt. Es ist jedoch auch möglich, daß die Reformerräume z.B. direkt aneinander grenzen oder z.B. über Rohrleitungssysteme oder z.B. über eine wärmeleitfähige Trennwand miteinander verbunden sind. Im Bereich dieser Zwischenräume können ebenfalls Verwirbelungsmittel analog zu **9** vorgesehen sein.

In dem vorliegenden Ausführungsbeispiel aus Fig. 1a stehen alle Reformerräume **3** in wärmeleitendem Kontakt miteinander und alle Reformerräume weisen wärmeleitende Verwirbelungsmittel **9** auf. Dadurch kann die bei der exothermen Reformierungsteilreaktion, freiwerdende Reaktionsenthalpie abgeleitet werden, verbleibt wenigstens teilweise im Reaktorbehälter **2** und trägt damit zur Beheizung desselben bei. Mit der Isolierung **8** wird die Zurückhaltung der Wärmeenergie unterstützt. Die bei der exothermen Reformierungsteilreaktion freiwerdende thermische Energie (Wärme) kann so nicht nur für die endotherme Reformierungsteilreaktion, sondern auch für die Verdampfung genutzt werden. Diese Ausführungsform der erfindungsgemäßen Vorrichtung ermöglicht einen wärmeübetragunsoptimierten Reformierungsprozeß und eine besonders wärmeökonomische Durchführung des erfindungsgemäßen Reformierungsverfahrens, was einen weiteren Vorteil der vorliegenden Erfindung darstellt.

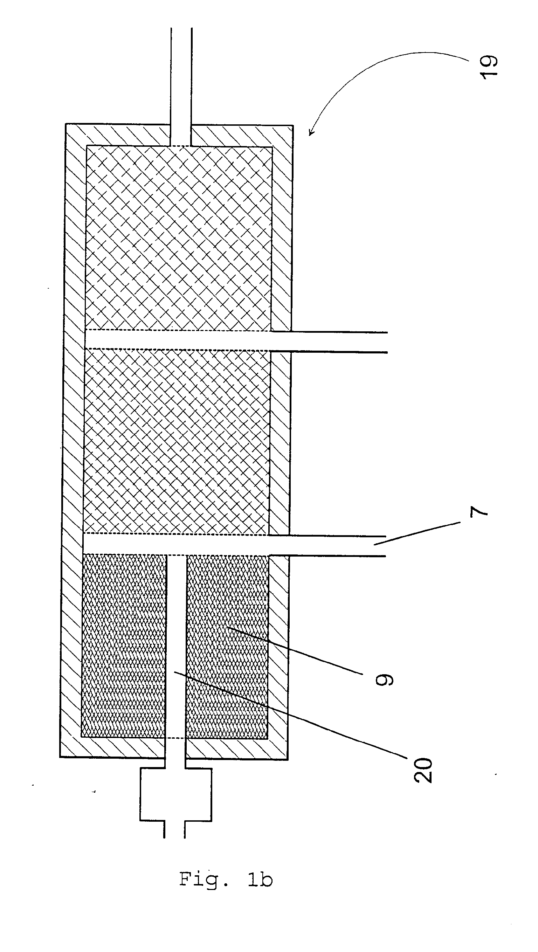

Die in Fig. 1b dargestellte Variante **19** der Vorrichtung **11** dient ebenfalls zum autothermen Reformieren von flüssigen Kohlenwasserstoffgemischen. Im Unterschied zu Vorrichtung **11** weist die Variante **19** eine verlängerte Einlaßleitung **20** auf, die im dargestellten Fall bis zum Zwischenraum zwischen Verdampfungsraum **4** und erstem Reaktionsraum **5** reicht. Diese Einlaßleitung besteht vorzugsweise aus wärmeleitfähigem Material.

Der durch das Einbringungsmittel **7** eintretende gasförmige Reaktionspartner verteilt sich im Verdampfungsraum **4** und führt ihm mindestens die zur Verdampfung des flüssigen Kohlenwasserstoffgemischs notwendige Energie zu. Die Einlaßleitung **20** besteht aus einem wärmeleitfähigen Material. Dadurch wird auch die Einlaßleitung **20** aufgeheizt, so daß das über die Einlaßleitung **20** zugeführte flüssige Kohlenwasserstoffgemisch im wesentlichen vollständig, jedoch zersetzungsfrei darin verdampfen kann. Der Wärmetransport vom gasförmigen Reaktionspartner zum Kohlenwasserstoffgemisch findet bei dieser Variante wie bei einem Wärmetauscher statt. Der Vorteil der Variante **19** besteht darin, daß eine Vermischung des Kohlenwasserstoffgemischs mit dem gasförmigen Reaktionspartner vor der im wesentlichen vollständigen Verdampfung des Kohlenwasserstoffgemischs noch besser verhindert wird.

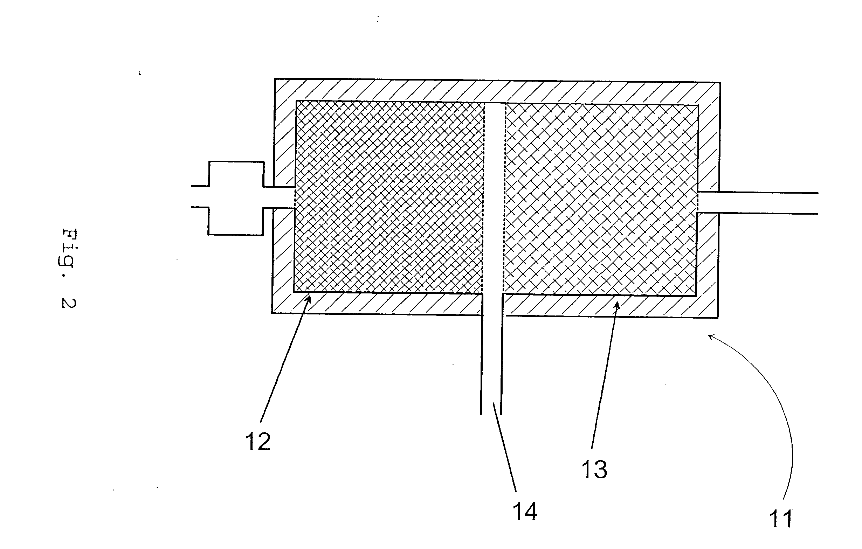

Die in Fig. 2 schematisch dargestellte Vorrichtung **11** dient zum Dampfreformieren von flüssigen Kohlenwasserstoffgemischen. Die Vorrichtung **11** ist analog zu Vorrichtung **1** aufgebaut, weist jedoch im Unterschied zu dieser nur zwei Reformerräume auf, und zwar den Verdampfungsraum **12** und den Reaktionsraum **13**. Außerdem ist nur ein Einbringungsmittel **14** im Bereich zwischen Verdampfungsraum **12** und Reaktionsraum **13** vorgesehen, durch das Wasserdampf zugeführt werden kann.

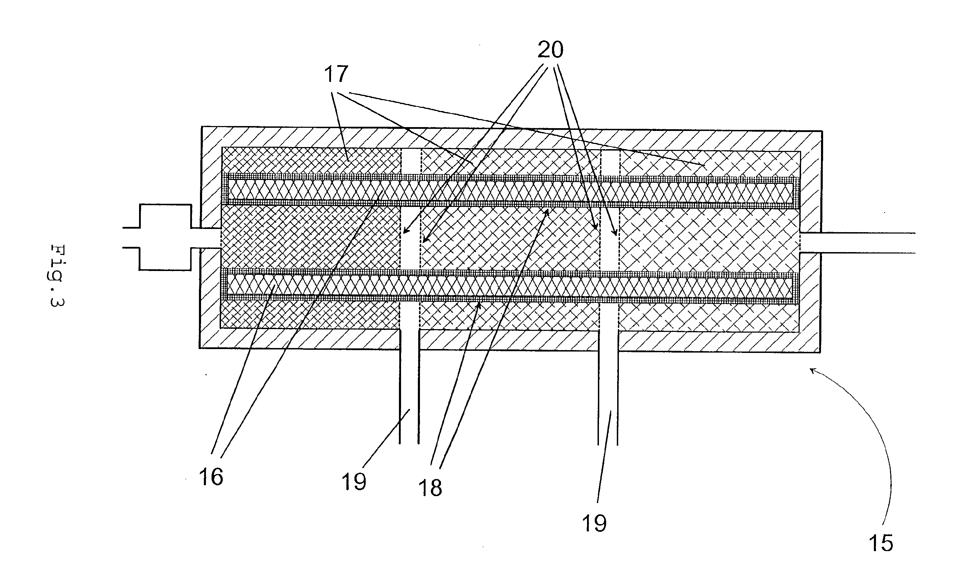

Die in Fig. 3 schematisch dargestellte Vorrichtung **15** zeigt ein bevorzugtes Ausführungsbeispiel der erfindungsgemäßen Vorrichtung mit zwei ebenfalls schematisch dargestellten Glühkerzen **16**. Die Glühkerzen sind in diesem Ausführungsbeispiel so in dem Reaktorbehälter angeordnet, daß die gleichzeitige elektrische Beheizung aller Reformerräume möglich ist. Die Reformerräume enthalten als Verwirbelungsmittel **17** Metalldrahtgeflechte, so daß die Gefahr eines Kurzschlusses besteht. Die Glühkerzen **12** sind daher mit Mitteln zur elektrischen Isolierung **18** umhüllt, im vorliegenden Ausführungsbeispiel sind das wärmeleitenden Keramikrohre.

Die Anordnungen bestehend aus Mittel zum elektrischen Beheizen **16** und elektrischer Isolierung **18** sind von ihrer räumlichen Ausdehnung her selbstverständlich so bemessen, daß sie nicht die gesamte Breite der Reformerräume einnehmen, da sie sonst bestimmte Bereiche der Reformerräume räumlich isolieren und das Einströmen der gasförmigen Reaktionspartner in diese Bereiche verhindern würden. Die besagten Anordnungen sind vielmehr räumlich so bemessen, daß sie eine weitgehend ungehinderte Ausbreitung der über die Einbringungsmittel **19** zugeführten gasförmigen Reaktionspartner über die gesamte Fläche der Reformerraumbegrenzungen **20** zulassen. Im Falle des Ausführungsbeispiels aus Fig. 3 ist die Anordnung bestehend aus Glühkerze **16** und Keramikhülse **18** mit annähernd kreisförmigem Querschnitt ausgebildet, sodaß die über die Einbringungsmittel **19** zugeführten gasförmigen Reaktionspartner problemlos an den Anordnungen vorbeiströmen können.

Die in Fig. 3 dargestellte Vorrichtung **11** mit Mitteln zum elektrischen Beheizen läßt sich sebstverständlich auch analog mit einer Vorrichtung realisieren, die, wie in Fig. 2 dargestellt, nur zwei Reformerräume aufweist und z.B. zur Dampfreformierung dient.

### Bezugszeichen

- 1: Vorrichtung (Fig. 1a)
- 2: Reaktorbehälter
- 3: Reformerräume
- 4: Verdampfungsraum
- 5: Reaktionsräume
- 6: Dosierungsmittel (Mittel zum kontinuierlichen, dosierten Einbringen von flüssigen Kohlenwasserstoffgemischen)
- 7: Einbringungsmittel (Mittel zum Einbringen gasförmiger Reaktionspartner)
- 8: Isolierung
- 9: Verwirbelungsmittel (Mittel zum Verwirbeln des Substanzstromes)
- 10: Auslaßleitung

- 11: Vorrichtung (Fig 2)
- 12: Verdampfungsraum
- 13: Reaktorraum
- 14: Einbringungsmittel (Mittel zum Einbringen gasförmiger Reaktionspartner)

- 15: Vorrichtung (Fig. 3)
- 16: Glühkerze
- 17: Keramikhülse
- 18: Reformerraumbegrenzung

- 19: Vorrichtung (Fig. 1b)
- 20: Einlaßleitung

## Patentansprüche

1. Verfahren zur Reformierung eines flüssigen Kohlenwasserstoffgemischs, **dadurch gekennzeichnet, daß** man
1.1. in einem ersten Verfahrensschritt das flüssige Kohlenwasserstoffgemisch kontinuierlich und dosiert bereitstellt,
1.2. in einem zweiten Verfahrensschritt das flüssige Kohlenwasserstoffgemisch im wesentlichen vollständig, jedoch weitgehend zersetzungsfrei verdampft,
1.3. in einem dritten Verfahrensschritt das verdampfte Kohlenwasserstoffgemisch mit wenigstens einem gasförmigen Reaktionspartner in Kontakt bringt,
1.4. in einem vierten Verfahrensschritt das gasförmige Kohlenwasserstoff-Reaktionspartner-Gemisch zur Reaktion bringt,
1.5. gegebenenfalls in weiteren Verfahrensschritten die Verfahrensschritte 1.3. und 1.4. ein- oder mehrmals wiederholt
1.6. und das erhaltene Reformatgas anschließend seiner Verwendung entgegen führt.

2. Verfahren gemäß Anspruch 1, **dadurch gekennzeichnet, daß** das flüssige Kohlenwasserstoffgemisch durch Zufuhr thermischer Energie verdampft wird.

3. Verfahren gemäß Anspruch 2, **dadurch gekennzeichnet, daß** die Zufuhr thermischer Energie in der Startphase durch wenigstens ein Mittel zum elektrischen Beheizen erfolgt.

4. Verfahren gemäß Anspruch 2 oder 3, **dadurch gekennzeichnet, daß** die Zufuhr thermischer Energie ab Erreichen der Betriebstemperatur durch wenigstens einen der gasförmigen Reaktionspartner erfolgt.

5. Verfahren gemäß einem der Ansprüche 1 bis 4, **dadurch gekennzeichnet, daß** man wenigstens die für die Reformierungsreaktion notwendige thermische Energie zuführt.

6. Verfahren gemäß einem der Ansprüche 1 bis 5, **dadurch gekennzeichnet, daß** man eine Wirbelbewegung in dem Substanzstrom erzeugt.

7. Verfahren gemäß einem der Ansprüche 1 bis 6, bei dem das flüssige Kohlenwasserstoffgemisch autotherm reformiert wird, **dadurch gekennzeichnet, daß** man
7.1. in einem ersten Verfahrensschritt das flüssige Kohlenwasserstoffgemisch kontinuierlich und dosiert bereitstellt,
7.2. in einem zweiten Verfahrensschritt das flüssige Kohlenwasserstoffgemisch im wesentlichen vollständig, jedoch weitgehend zersetzungsfrei verdampft,
7.3. in einem dritten Verfahrensschritt das verdampfte Kohlenwasserstoffgemisch mit Wasserdampf in Kontakt bringt,
7.4. in einem vierten Verfahrensschritt das gasförmige Kohlenwasserstoff-Wasserdampf-Gemisch aus dem vorhergehenden Verfahrensschritt wenigstens teilweise reformiert,
7.5. in einem fünften Verfahrensschritt das wenigstens teilweise reformierte Gemisch aus dem vorhergehenden Verfahrensschritt mit einem sauerstoffhaltigen Gasgemisch, bevorzugt Luft, in Kontakt bringt,
7.6. in einem sechsten Verfahrensschritt die Reformierung vervollständigt
7.7. und das erhaltene Reformatgas anschließend seiner Verwendung entgegen führt.

8. Verfahren gemäß einem der Ansprüche 1 bis 6, bei dem das flüssige Kohlenwasserstoffgemisch dampfreformiert wird, **dadurch gekennzeichnet, daß** man
8.1. in einem ersten Verfahrensschritt das flüssige Kohlenwasserstoffgemisch kontinuierlich und dosiert bereitstellt,
8.2. in einem zweiten Verfahrensschritt das flüssige Kohlenwasserstoffgemisch im wesentlichen vollständig, jedoch weitgehend zersetzungsfrei verdampft,
8.3. in einem dritten Verfahrensschritt das verdampfte Kohlenwasserstoffgemisch mit Wasserdampf in Kontakt bringt,
8.4. in einem vierten Verfahrensschritt das gasförmige Kohlenwasserstoff-Wasserdampf-Gemisch aus dem vorhergehenden Verfahrensschritt zur Reaktion bringt,
8.5. und das erhaltene Reformatgas anschließend seiner Verwendung entgegen führt.

9. Vorrichtung zum Durchführen des Verfahrens nach einem der Ansprüche 1 bis 8 mit einem Reformersystem, wobei das Reformersystem mindestens zwei in einem Behälter (**2**) angeordnete Reformerräume (**3**) aufweist und die Reformerräume einen Verdampfungsraum (**4**) und mindestens einen Reaktionsraum (**5**) umfassen, wobei ferner Dosierungsmittel für Kohlenwasserstoffgemische (**6**) sowie Einbringungsmittel für gasförmige Reaktionspartner (**7**) vorgesehen sind, **dadurch gekennzeichnet, daß** die Dosierungsmittel (**6**) im Bereich des Verdampfungsraums (**4**) vorgesehen sind und die Einbringungsmittel (**7**) im Bereich zwischen mindestens zwei der Reformerräume (**3**).

10. Vorrichtung gemäß Anspruch 9, **dadurch gekennzeichnet, daß** mindestens eines der Einbringungsmittel zwischen dem Verdampfungsraum und einem nachgeschalteten, angrenzenden, ersten Reaktionsraum vorgesehen ist.

11. Vorrichtung gemäß Anspruch 9 oder 10, **dadurch gekennzeichnet, daß** der Verdampfungsraum in wärmeleitendem Kontakt mit einem nachgeschalteten, daran angrenzenden, ersten Reaktionsraum steht.

12. Vorrichtung gemäß einem der Ansprüche 9 bis 11, **dadurch gekennzeichnet, daß** alle aneinander angrenzenden Reformerräume miteinander in wärmeleitendem Kontakt stehen.

13. Vorrichtung gemäß einem der Ansprüche 9 bis 12, **dadurch gekennzeichnet, daß** in mindestens einem Reformerraum, bevorzugt in allen Reformerräumen, Mittel zum Verwirbeln des Substanzstromes vorgesehen sind.

14. Vorrichtung gemäß Anspruch 13, **dadurch gekennzeichnet, daß** die Verwirbelungsmittel aus wärmeleitfähigem Material bestehen, bevorzugt aus Metall oder Metallegierungen.

15. Vorrichtung gemäß Anspruch 13 oder 14, **dadurch gekennzeichnet, daß** die Verwirbelungsmittel aus Metalldraht bestehen, bevorzugt aus Metalldrahtgestricken oder Metalldrahtgeflechten.

16. Vorrichtung gemäß einem der Ansprüche 13 bis 15, **dadurch gekennzeichnet, daß** die mittleren Durchmesser der durchlässigen Öffnungen der Verwirbelungsmittel in Strömungsrichtung zunehmen.

17. Vorrichtung gemäß einem der Ansprüche 9 bis 16, **dadurch gekennzeichnet, daß** wenigstens ein Mittel zum elektrischen Beheizen vorgesehen ist

18. Vorrichtung gemäß Anspruch 17, **dadurch gekennzeichnet, daß** daß es sich bei dem wenigstens einen Mittel zum elektrischen Beheizen um eine oder mehrere elektrische Widerstandsheizungen handelt, bevorzugt um eine oder mehrere Glühkerzen.

19. Verwendung der Vorrichtung gemäß einem der Ansprüche 9 bis 18 in Fahrzeugen mit Brennstoffzellen.

20. Verwendung gemäß Anspruch 19 in Brennstoffzellensystemen zum Antrieb der Fahrzeuge mit Brennstoffzellen.

21. Verwendung gemäß Anspruch 19 oder 20 in Brennstoffzellensystemen zur zusätzlichen Versorgung von Fahrzeugen mit elektrischer Energie, insbesondere in auxiliary power units.
